# EUROPEAN PATENT SPECIFICATION

(11) **EP 0 394 975 B1**
(45) Date of publication and mention of the grant of the patent: **22.12.1993**
(21) Application number: 90107791.7
(22) Date of filing: 24.04.1990
(51) Int. Cl.: G11B 15/675, G11B 15/66

(54) **Cassette loading apparatus**
Kassettenladevorrichtung
Dispositif de chargement de cassette

(30) Priority: 24.04.1989 JP 101633/89
(43) Date of publication of application: 31.10.1990
(73) Proprietor: HITACHI, LTD., Chiyoda-ku, Tokyo 100 (JP); Hitachi Video & Information System, Inc., Yokohama-shi Kanagawa-ken 244 (JP)
(72) Inventor: Iyota, Koji, Katsuta-shi (JP); Nishida, Ikuo, Katsuta-shi (JP); Yamasita, Yosiharu, Katsuta-shi (JP); Ohmori, Motonori, Katsuta-shi (JP); Takeda, Hidekazu, Katsuta-shi (JP); Iwakura, Masao, Katsuta-shi (JP); Itou, Tetsuo, Takaba, Katsuta-shi (JP)
(74) Representative: Altenburg, Udo, Dipl.-Phys.

(56) References cited:
- EP-A- 0 203 784
- GB-A- 2 067 001

## Description

### BACKGROUND OF THE INVENTION

The present invention relates to a cassette loading apparatus for a magnetically recording/reproducing apparatus such as a video tape recorder or the like (hereinafter referred to as a VTR), and more particularly to a cassette loading apparatus which is suitable for being made small in size and light in weight.

As a mechanism for loading a cassette, containing a magnetic recording tape, onto a recording/reproducing apparatus, there is known a slide type mechanism. The slide type mechanism is provided with a cassette loading section formed on a movable chassis. In this mechanism, after the tape cassette has been loaded in the recording/reproducing apparatus through the loading section, the cassette is positioned in the recording/reproducing condition by the sliding movement of the movable chassis.

Such a slide type loading mechanism is disclosed in, for instance, Japanese Patent Unexamined Publication Nos. 59-171070 and 61-271651.

In the loading apparatus disclosed in the above-described Japanese Patent Unexamined Publication No. 59-171070, a cassette holder is mounted on a tape cassette loading section so as to be movable up and down through X link type levers. In order to load the tape cassette onto the recording/reproducing apparatus, the cassette is inserted into the cassette holder, and the holder is depressed and moved toward the tape cassette loading section. Thus, the tape cassette is loaded on the loading section, and thereafter, the cassette is moved to the recording/reproducing position by the movement of the loading section.

On the other hand, in the loading mechanism disclosed in the above-described Japanese Patent Unexamined Publication No. 61-271651 or the corresponding European Patent Application EP-A-0 203 784, there is provided a cassette holder which is pivotably mounted on a slide chassis. This cassette holder is composed of inner and outer double holders, the outer holder being movable relative to the tape cassette, whereby even if any external force would be applied to the holder after the completion of loading of the tape cassette in place, such a force could not adversely affect the position of the cassette and at the same time, any damage of the slide mechanism could be avoided. This cassette loading apparatus is defined in the preamble of the enclosed claim 1.

As described above, the slide type loading apparatus, has the structure wherein the tape cassette is loaded in the vicinity of the recording/reproducing apparatus. This is suitable particularly for a camera integrated type portable VTR. However, such a VTR has recently been made smaller and smaller. It is thus desired to further miniaturize the tape cassette loading apparatus.

### SUMMARY OF THE INVENTION

It is an object of the invention to provide a tape cassette loading apparatus which is operated without fail and which may be made small in size and light in weight.

Another object of the invention is to provide a compact and light-weight tape cassette loading apparatus which needs a small number of parts and which may easily be produced.

Still another object of the invention is to provide a tape cassette loading apparatus which leads to the further miniaturization of a portable VTR.

As will be described hereinafter in more detail, the invention has been accomplished on the basis of the analysis results of the conventional structure as disclosed in the foregoing Japanese Patent Unexamined Publication No. 61-271651, which analysis has been made by the present inventors, to attain the foregoing and other objects by further improving the conventional structure, particularly the cassette holder mechanism thereof.

According to the present invention, there is provided a cassette loading apparatus comprising slide means for moving a tape cassette thereon to and back from a recording/reproducing position, and loading means having inner and outer cassette holder for loading the cassette on the slide means, the outer cassette holder being pivotably provided relative to the slide means. In the cassette loading apparatus, the inner holder is supported by the outer holder so that the inner holder is pivotable together with the outer cassette holder and is slidable in directions of movement of the cassette, and is operatively connected to the slide means so that the inner cassette holder is moved together with the slide means.

The apparatus of the present invention is defined in the enclosed claims. The inner cassette holder is supported to the outer cassette holder, and even if the slide means is moved, the operational supports of the two holders will not be overlapped with each other in the longitudinal direction of the cassette. Accordingly, it is possible to reduce the size of the cassette loading apparatus in a direction of width thereof, i.e., the longitudinal direction of the cassette. This makes it possible to further miniaturize the overall apparatus in cooperation with the feature of the above-described slide loading system.

Also, the operational pivot of the inner and outer cassette holders is single and common to thereby reduce the number of parts for supporting the operational pivot and make it easy to produce the apparatus and to reduce the weight of the overall apparatus.

Further, since the outer cassette holder is not slid when the slide means and the inner cassette holder are moved, there is no fear that a gap or opening would be formed in a part of an outer peripheral portion of the apparatus in accordance with the slide loading operation so that the internal mechanism of the apparatus would be exposed to the outside.

### BRIEF DESCRIPTION OF THE DRAWINGS

The foregoing and other objects, features and advantages of the present invention will become more apparent by reading the following description in conjunction with the following drawings in which:
Figs. 1 through 6 show a tape cassette loading apparatus according to an embodiment of the invention;
Fig. 1 is a perspective view showing an essential part of the apparatus under the condition prior to the cassette loading operation;
Fig. 2 is a cross-sectional view showing the essential part of the apparatus shown in Fig. 1;
Fig. 3 is a cross-sectional view showing the essential part under the cassette loading condition;
Fig. 4 is a top plan view showing the essential part shown in Fig. 2;
Fig. 5 is a top plan view showing the essential part shown in Fig. 3;
Fig. 6 is a cross-sectional view showing the essential part as viewed in the slide direction; and
Fig. 7 is a top plan view showing an essential part of a conventional tape cassette loading apparatus.

### DESCRIPTION OF THE PREFERRED EMBODIMENTS

At the outset, in order to make clear the improvement by the present invention, problems inherent in a conventional tape cassette loading apparatus as shown in the foregoing Japanese Patent Unexamined Publication No. 61-271651 will be described. These problems are analyzed by the present inventors and the analysis result constitutes the basis of the present invention.

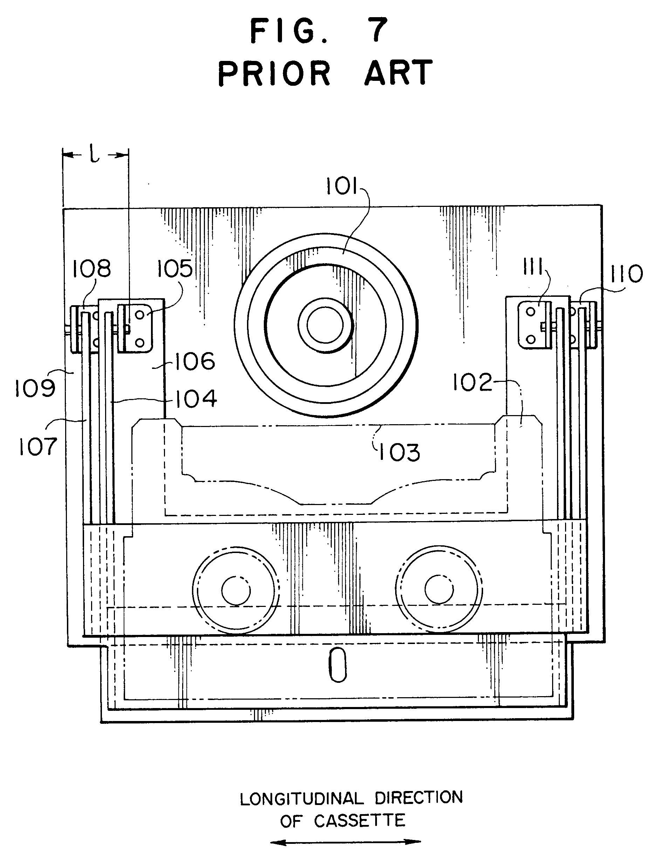

Referring now to Fig. 7, the conventional side type loading mechanism is provided with inner and outer double holders. The inner cassette holder 104 is pivotally supported by side plates 105 and 111 which are fixed to a movable chassis 106. On the other hand, the outer cassette holder 107 is pivotally supported by side plates 108 and 110 which are fixed to a stationary portion 109 such as a chassis of a VTR. A rotary head drum 101 is mounted on the stationary portion 109. The cassette holders 104 and 107 are adapted to receive a tape cassette 102 and to load it on the movable chassis 106. Subsequently, the cassette is moved toward the drum 101 by the movable chassis 106 and is positioned for recording/reproducing. A tape 103 is received in the cassette 102.

The inner and outer cassette holders 104 and 107 make a pivotal motion together relative to the stationary portion 109 of the VTR for loading and unloading the tape cassette. For this reason, the pivots of the inner and outer cassette holders are arranged in alignment with each other in the longitudinal direction of the cassette during the pivot operation. However, in the conventional apparatus, since the pivot points are overlapped with each other, there is a problem that a distance indicated by ℓ in Fig. 7 is increased. Furthermore, it is necessary to provide members for supporting the operational pivots of the two inner and outer cassette holders, respectively. As a result, the number of parts is increased. In particular, the increase of the dimension ℓ results in an increase of the size in a widthwise direction of the apparatus. This is a hindrance against the miniaturization of the apparatus.

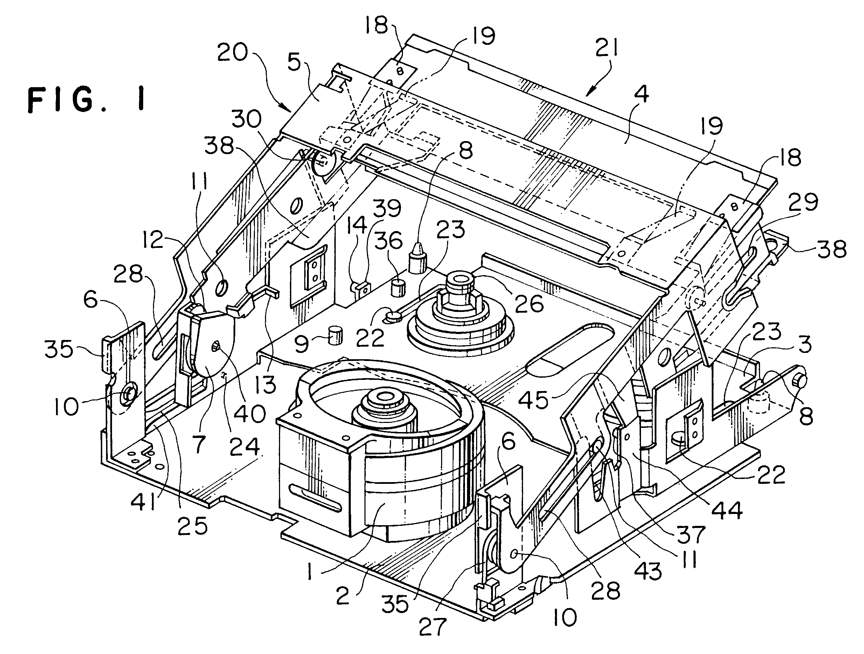

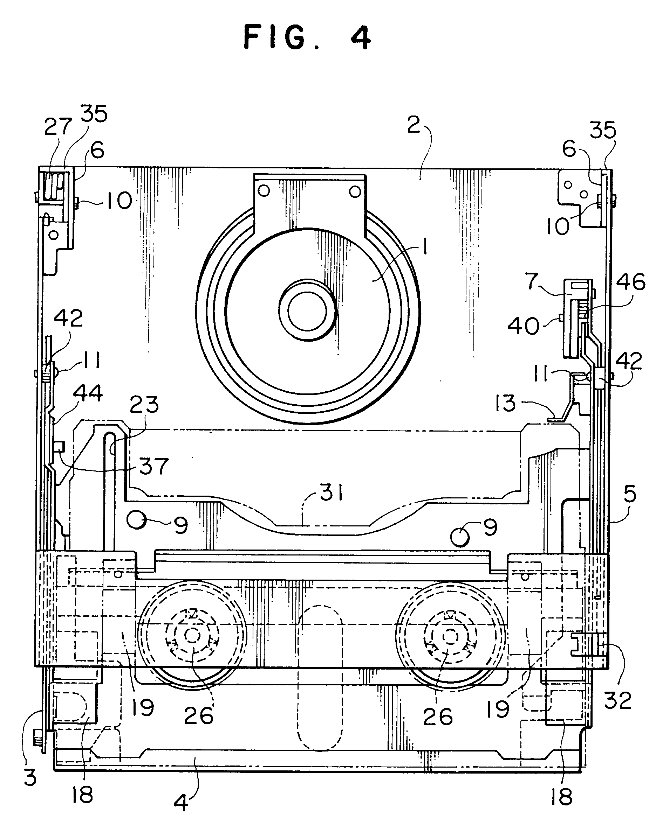

A tape cassette loading apparatus according to an embodiment of the invention will now be described with reference to Figs. 1 through 6.

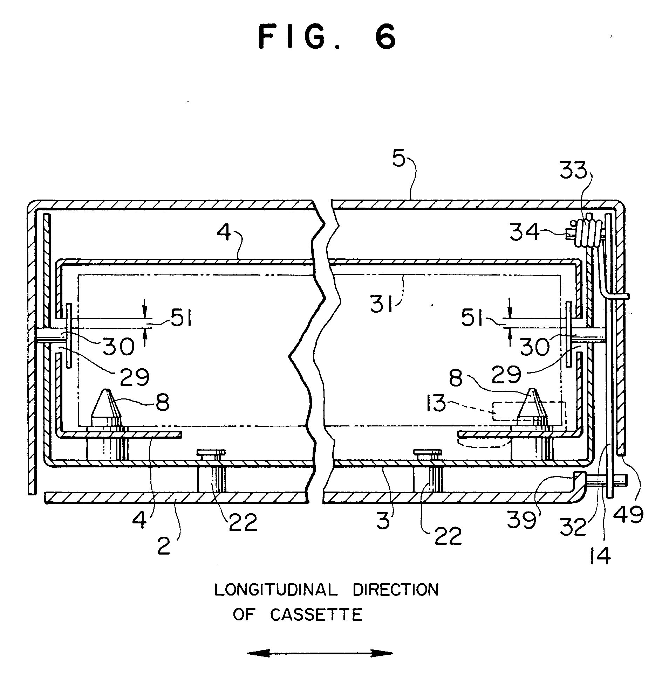

Fig. 1 shows an essential part of a VTR into which is incorporated the cassette loading apparatus according to the present invention. The apparatus includes a cassette loading section 20 which is pivotable relative to a main chassis 2, i.e., a stationary portion of the VTR. The cassette loading section is of the double structure type having an inner cassette holder 4 and an outer cassette holder 5. Essential portions of these cassette holders are substantially in the form of boxes in cross section by bending metallic materials as best shown in Fig. 6, thereby defining a cassette insertion opening and a space for receiving the cassette in cooperation with each other.

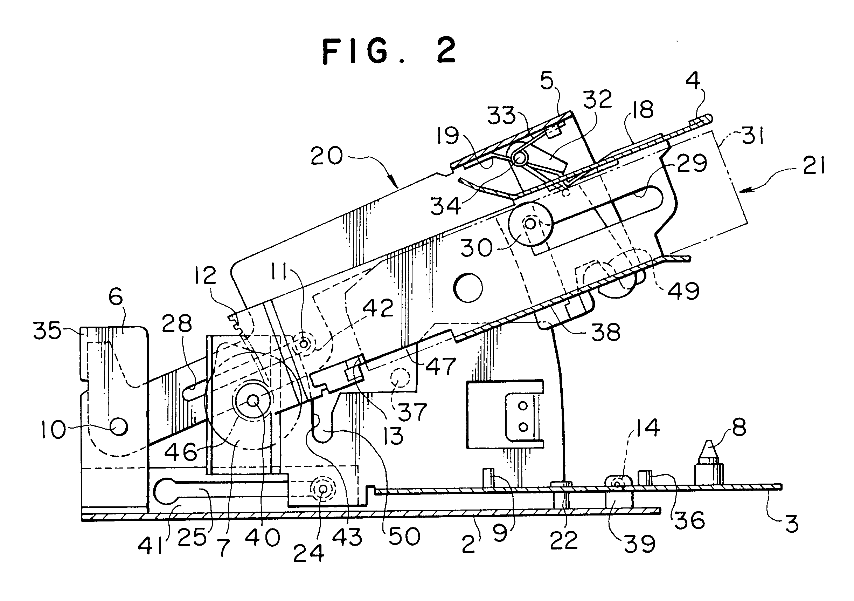

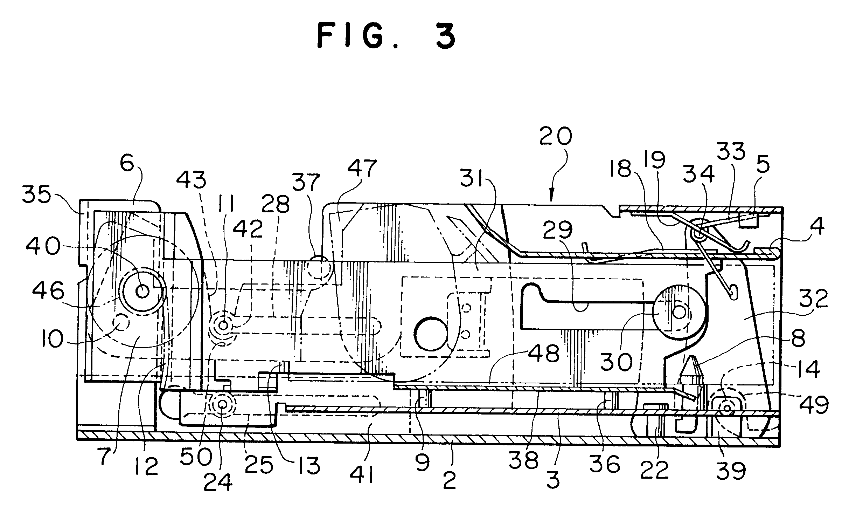

The main chassis 2 is substantially in the form of a rectangular plate. A rotary head drum 1 is mounted on the main chassis 2 and a pair of side plates 6 are fixed on both sides of the main chassis 2. A movable chassis 3 is disposed above the main chassis 2. The movable chassis 3 has a bottom which is substantially in the form of a rectangular plate, and is provided on both sides with bent portions extending upwardly. The movable chassis 3 is connected to a slide mechanism to thereby constitute slide means and is slidable in a horizontal direction as shown in Figs. 2 and 3 and substantially in parallel to the main chassis 2. The slide mechanism is a drive device including a cam mechanism or a rack and pinion mechanism (not shown) which is interposed between the main chassis 2 and the movable chassis 3. The slide mechanism may be the conventional mechanism which is disclosed in, for example, the above-described Japanese Patent Unexamined Publication No. 59-171070, and hence the detailed description thereof will be omitted herein.

The outer cassette holder 5 is pivotally supported by pivot shafts 10 provided at the respective side plates 6 of the main chassis 2. On the other hand, the inner cassette holder 4 is connected to the outer cassette holder 5 through a pair of outwardly extending engagement pins 11 provided on the inner cassette holder 4 and a pair of inwardly extending engagement pins 30 provided on the outer cassette holder 5. The engagement pins 11 are slidably engaged with elongated guide holes 28 which are formed in the bent portions of the outer cassette holder 5, respectively. The engagement pins 30 are slidably engaged with elongated guide holes 29 which are respectively formed in the bent portions of the inner cassette holder 4. Accordingly, the inner cassette holder 4 is supported inside of the outer cassette holder 5 so as to pivot together, and is slidable substantially in a radial direction about the pivots 10 relative to the outer cassette holder 5.

The guide holes 28 are arranged so that the engagement pins 11 are located in the vicinity of the rear end portions of the guide holes 28 with respect to the cassette insertion direction under the condition shown in Fig. 2. On the other hand, the guide holes 29 are arranged so that the engagement pins 30 are located in the vicinity of the forward end portions of the guide holes 29 with respect to the cassette insertion direction under the condition shown in Fig. 3.

Further, coil springs 27 are wound around the pivot shafts 10 of the side plates 6, so that the coil springs 27 cause the outer cassette holder 5 to be biased toward the open direction (upward in Fig. 1). The upper limit of the outer cassette holder 5 is restricted by the abutment of the end portions of the holder with an upper bent portion 35 of the side plates 6.

A pair of leaf springs 19 are fixed to the outer cassette holder 5 at positions thereof facing the upper surface of the inner cassette holder 5. The inner cassette holder 4 is urged to rotate in the close direction (downward in Fig. 1) by the leaf springs 19. However, the rotation of the inner cassette holder 4 is restricted by the engagement pins 30 of the outer cassette holder 5 before the loading of the tape cassette. Also, under the condition after the loading of the cassette, the bottom of the inner cassette holder is brought into contact with height limit pins 36 which are formed on the movable chassis, to thereby limit the rotation of the inner cassette holder.

On one of the bent side portions of the inner cassette holder 4, there is formed a gear 12 in the vicinity of the above-described pivot shaft 10. The gear 12 is engaged with a gear 46 of a damper which is provided on the movable chassis for imparting a dampening force to the rotational motion of the cassette loading section 20. Also, in the inner cassette holder 4, there is provided a cassette stopper 13 which is formed by bending an end portion of the holder in the cassette insertion direction. The insertion amount of the tape cassette into the inner cassette holder 4 is determined by the stopper 13. A pair of leaf springs 18 are fixed to an upper portion of the inner cassette holder 4. When the tape cassette 31 is inserted into the inner cassette holder 4, the leaf springs 18 serve to depress the tape cassette against a bottom plate 38 of the inner cassette holder 4 to temporarily retain the cassette as shown in Fig. 2. On the other hand, under the condition after the cassette has been loaded as shown in Fig. 3, the tape cassette 31 is depressed by the leaf springs 18 and is retained by positioning pins 8 and height limit pins 9 of the movable chassis 3. This position of the tape cassette will be herein referred to as a reference position.

An inwardly extending pin 34 is provided on one of the bent side portions of the outer cassette holder as shown in figs. 2 and 3. A lock arm 32 is pivotably supported to the pin 34. The lock arm 32 is based in a clockwise direction about the pin 34 in Figs. 2 and 3 by a coil spring 33 wound around the pin 34. Prior to the condition of loading the cassette, the engagement pin 30 of the outer cassette holder 5 serves to restrict the rotation of the lock arm 32. A bent portion 39 is formed in the main chassis 2 at a position corresponding to the lock arm 32. A lock roller 14 is mounted on a side surface of the bent portion 39. The lock roller 14 is engaged with a hook portion formed at a distal end portion of the lock arm 32 for holding the cassette loading section 20 in the horizontal position in Figs. 2 and 3.

In order to slidingly guide the movable chassis, guide pins 22 extend upward from the main chassis 2 and elongated guide holes 23 are formed in the bottom of the movable chassis 3. A guide pin 24 is formed in one of the bent side portions of the movable chassis 3, and a bent portion 41 is formed at a position of the main chassis 2 corresponding to the guide pin 24. An elongated guide hole 25 is formed in the bent portions 41 of the main chassis 2. The sliding guide is attained by the guide pins 22 slidingly engaged with the respective guide holes 23 and the guide pin 24 slidingly engaged with the guide hole 25.

Also, on the bottom of the movable chassis 3, a pair of shafts 26 for driving reels of the tape cassette and the pins 8, 9 and 36 for positioning the cassette are mounted. A pin 37 for lifting the cover of the cassette is provided on one of the bent portions of the movable chassis 3 and a pin 40 is mounted on the other bent portion of the movable chassis. The above-described damper 7 is mounted on the movable chassis 3 through the pin 40. Accordingly, these elements or components are moved together with the movable chassis.

A groove like guide portion 43 extending vertically is formed in one of the bent portions of the movable chassis 3. The guide portion 43 receives and guides the roller 42 which is rotatably mounted on one of the engagement pins 11 of the inner cassette holder 4. During the opening and closing motion of the cassette loading section 20, the inner cassette holder 4 is guided in the circumferential direction about the pivot shafts 10 of the outer cassette holder 5 by the engagement of the guide portion 43 and the roller 42, thereby ensuring the smooth operation.

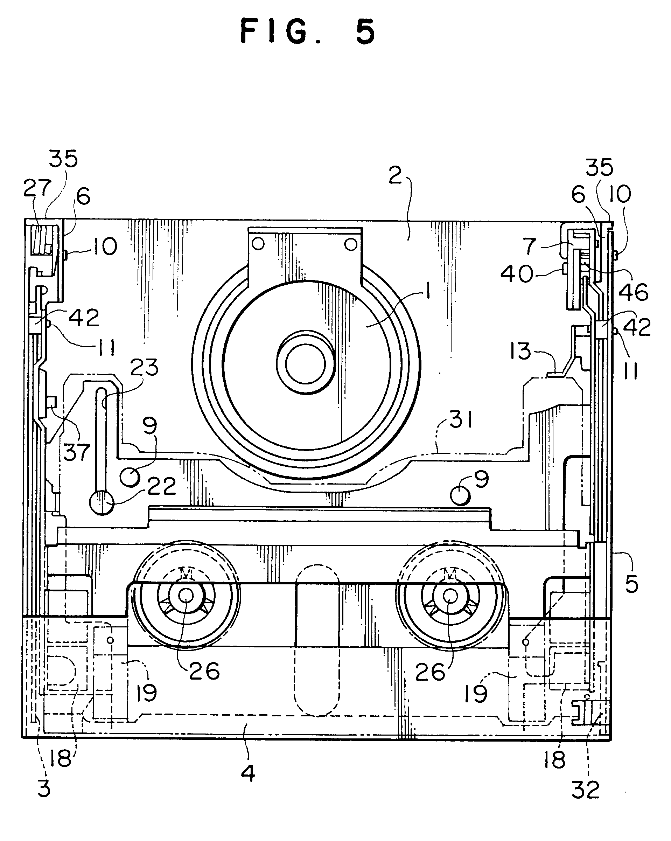

Fig. 6 shows a positional relationship of the essential part of the apparatus in the longitudinal direction of the tape cassette. As shown in Fig. 6, from the inner space for receiving the cassette to the outside, there are arranged the inner cassette holder 4, the movable chassis 3 and the outer cassette holder 5 at intervals for operation. However, as shown in Fig. 1, a part 44 of the bent portion 44 of the movable chassis 3 provided with the pin 37 is located inside the rest of this bent portion. On the other hand, a bent part 45 extending outwardly beyond the bent part 44 is provided in the bent portion of the inner cassette holder 4 at a position corresponding to the bent part 44. Therefore, as shown in Fig. 5, the positional relationship between the inner cassette holder 4 and the movable chassis 3 is reversed at the pin 37 as shown in Fig. 5. With this arrangement, when the cassette holders are pivotally moved, the interference between the inner holder 4 and the pin 37 is avoided. Furthermore, the bent part 45 is slidingly moved on the bent part 44 of the movable chassis, whereby the displacement of the inner cassette holder 4 in the longitudinal direction of the cassette is suppressed and the interference between this holder and the movable chassis 3 is avoided.

Subsequently, the operation of the above-described cassette loading apparatus will now be described.

In the condition shown in Fig. 1, the tape cassette 31 is inserted into the inner cassette holder 4 through the cassette insertion opening 21. At this time, the insertion amount of the cassette holder 4 is restricted by the cassette stopper 13, and simultaneously therewith is depressed by the leaf springs 18 to thereby being held by the inner cassetted holder 4.

Subsequently, when the cassette loading section 20 is depressed into the close position toward the movable chassis 3, the outer cassette holder 5 is rotated about the pivot shafts 10 in the close direction. The rotational motion is transferred to the inner cassette holder 4 through the engagement pins 11 and 30 and through the leaf springs 19, so that the cassette 31 is moved toward the loading position together with the holder 4. As described before, the inner cassette holder 4 is slidable substantially in the radial direction about the pivot shafts 10 relative to the outer cassette holder by the elongated guide holes 28 of the outer cassette holder 5 and the elongated guide holes 29 of the inner cassette holder 4. However, during this rotational motion, the roller 42 mounted on the engagement pin 11 is engaged with the guide portion 43 of the movable chassis bent portion and is guided in the circumferential direction about the pivot shafts 10. For this reason, the inner cassette holder 4 will not be slid but is smoothly moved together with the outer cassette holder.

The tape cassette 31 has a cover 47 at a tip thereof in the insertion direction. The cover 47 is brought into contact with the cover lifting pin 37 of the movable chassis during the loading operation. Thereafter, the cover 47 is opened in accordance with the movement of the cassette to thereby expose the magnetic tape incorporated in the cassette.

When the cassette loading section 20 is moved to the close position, the rotatable lock arm 32 of the outer cassette holder 5 is engaged with the lock roller 14 of the main chassis 2, so that the cassette loading section 20 is maintained in the horizontal position. At this time, the reel drive shafts 26 and the positioning pins 8 of the movable chassis 3 are inserted into the reel holes and the reference holes of the bottom of the cassette 31, respectively, to thereby perform the positioning operation of the cassette in the horizontal direction. The bottom of the cassette 31 is brought into contact with the height limit pins 9 to thereby performing the positioning of the cassette in the height direction. Thus, the tape cassette 31 is loaded in the reference position on the movable chassis.

As described before, when the cassette is positioned in the reference position, the height of the inner cassette holder 4 is also restricted by abutment of the bottom thereof with the height limit pins 36 on the movable chassis as shown in Fig. 3. At this time, the bottom of the inner holder 4 is lower than the bottom of the tape cassette 31 positioned in the reference position. Namely, the inner holder 4 is positioned so that a small gap 48 is made between the bottom 38 of the inner cassette holder 4 and the bottom of the cassette. For this reason, the inner cassette holder 4 will not hinder the positioning of the tape cassette in height.

An arcuate cutout 49 is formed at the lower end of the bent side portion of the outer cassette holder 5 at a position corresponding to the lock roller 14 of the main chassis. This cutout 49 serves to come into contact with the lock roller 14 when an external force is applied to the cassette loading section 20, and to restrain the cassette loading section from displacing over a prescribed amount.

When the lock arm 32 is engaged with the lock roller 14 to thereby complete the locking operation of the cassette loading section 20, a lock detection switch (not shown) is operated to thereby start a motor of the above-described slide mechanism. The driving operation of the motor causes the movable chassis 3 to move toward the rotary head drum 1. At this time, a bottom 50 of the guide portion 43 of the movable chassis depresses the roller 42 of the inner cassette holder so that the roller 42 is moved along the elongated guide hole 28 of the outer cassette holder. In accordance with this movement, the guide holes 29 of the inner cassette holder 4 are also moved on the respective engagement pins 30 of the outer cassette holder. As a result, the inner cassette holder 4 is moved together with the movable chassis 3 to thereby change the relative position with respect to the outer cassette holder 5. The tape cassette 31 is moved together with the inner cassette holder 4, thus being positioned in the condition for recording/reproducing.

As shown in Fig. 6, a sufficient extra dimension 51 is defined between each guide hole 29 of the inner cassette holder 4 and the corresponding engagement pin 30. In the same manner, a sufficient extra dimension is defined between each guide hole 28 of the outer cassette holder 5 and the corresponding engagement pin 11. Accordingly, even if the external force is applied to the cassette loading section 20 after the cassette loading section 20 is locked and before the tape loading operation is completed by the movement of the movable chassis, the movement of the movable chassis 3 may be attained without any hindrance. Namely, even if the outer cassette holder 5 is displaced, the extra dimension may absorb the displacement, and only the biasing force by the leaf springs 18 and 19 is applied to the inner cassette holder 4, so that in the same manner, any other restriction force than the biasing force of the leaf springs 18 is not applied to the cassette.

During the unloading operation of the tape cassette, the foregoing operation is performed in the opposite order. First of all, the movable chassis 3 is returned back together with the inner cassette holder 4 and the tape cassette 31. When the returning operation of the movable chassis is completed, the cam mechanism (not shown) is operated to rotate the lock arm 32 and disengage it from the lock roller 14. Then, the outer cassette holder 5 is pressingly raised by the biasing force of the coil spring 27 to the position shown in Fig. 2. At this time, the inner cassette holder 4 follows the movement of the outer cassette holder 5 by the engagement pins 11 and 30 to be raised, and the tape cassette 31 is also raised in accordance with this movement.

In this upward movement, since the gear 12 of the inner cassette holder 4 is engaged with the gear 46 of the damper 7, a damper force is applied to the cassette loading section 20 to thereby attain the smooth rotation.

Although the present invention has been described on the basis of the foregoing embodiment, it should be appreciated that the present invention is not limited solely to the specific form of the embodiment; the scope is defined by the appended claims.

## Claims

1. A cassette loading apparatus comprising: slide means consisting of a movable chassis connected to a slide mechanism for moving a tape cassette to and back from a recording/reproducing position while carrying said cassette on said slide means; and loading means having an inner cassette holder (4) and an outer cassette holder (5) for loading said cassette on said slide means, said outer cassette holder (5) being pivotably provided relative to said slide means by being supported by pivot shafts (10) provided on a main chassis (2), and said inner cassette holder (4) is moved together with said outer cassette holder (5) between an inlet/outlet position for the cassette (31) and a close position, CHARACTERIZED IN THAT, said inner cassette holder (4) is supported by said outer cassette holder (5) through engagement means (11, 28, 29, 30) for connecting said inner cassette holder (4) to said outer cassette holder (5), said inner cassette holder (4) is coupled to said slide means (3) through guide means (42, 43) for restricting a sliding movement of said inner cassette holder (4) during the pivotal movement of said outer cassette holder (5) to thereby allow said inner cassette holder (4) to make a pivotal movement together with said outer cassette holder (5) and for transferring a drive force of said slide means (3) to said inner cassette holder (4) during the movement of said slide means (3) to thereby move said inner cassette holder (4) together with said slide means (3), said engagement means (11, 28, 29, 30) includes a plurality of engagement pins (11, 30) provided on at least one of said inner and outer cassette holders (4, 5) and a plurality of longitudinally elongated holes (28, 29) provided in at least another of said inner and outer cassette holders (4, 5) to engage with said pins (11, 30), said guide means includes a guide groove (43) which is provided in said slide means (3) to extend in a circumferential direction of a pivot center (10) of said outer cassette holder (5), and said guide groove (43) is engaged with at least one of said engagement pins (11).

2. The apparatus according to claim 1, wherein said holes (28, 29) are formed so as to have a larger size than a diameter of said engagement pins (11, 30), whereby even if an external force is applied during operation, a displacement of said outer cassette holder (5) is absorbed to thereby avoid any adverse affect against said inner cassette holder (4) and said slide means (3).

3. The apparatus according to claim 1 or 2, wherein said inner cassette holder (4) is depressed toward said slide means (3) by spring members (19) fixed to said outer cassette holder (5), and is provided with other spring members (18) for depressing said tape cassette (31), received in said inner cassette holder (4), toward a bottom portion (38) of said inner cassette holder (4), and when said cassette (31) is loaded on said slide means (3), the bottom portion (38) of said inner cassette holder (4) is separated from said cassette (31) to thereby position said cassette (31) in place.

## Patentansprüche

1. Kassettenladevorrichtung, die aufweist:
eine Gleiteinrichtung, die ein mit einem Gleitmechanismus verbundenes bewegliches Chassis zum Bewegen einer Bandkassette zu einer und aus einer Aufnahme-/Wiedergabeposition heraus aufweist, während die Kassette auf der Gleiteinrichtung getragen ist; und eine Ladeeinrichtung mit einem inneren Kassettenhalter (4) und einem äußeren Kassettenhalter (5) zum Laden der Kassette auf die Gleiteinrichtung vorgesehen ist, wobei der äußere Kassettenhalter (5) schwenkbar relativ zu der Gleiteinrichtung gestützt ist, indem der Halter (5) durch Drehzapfenwellen (10), die an einem Hauptchassis (2) vorgesehen sind, und der innere Kassettenhalter (4) zusammen mit dem äußeren Kassettenhalter (5) zwischen einer Eintritts-/Austrittsposition für die Kassette (31) und einer Schließposition bewegt wird, dadurch gekennzeichnet, daß der innere Kassettenhalter (4) durch den äußeren Kassettenhalter (5) durch eine Eingriffseinrichtung (11, 28, 29, 30) zum Verbinden des inneren Kassettenhalters (4) mit dem äußeren Kassettenhalter (5) gestützt ist, der innere Kassettenhalter (4) mit der Gleiteinrichtung (3) durch eine Führungseinrichtung (42, 43) zum Einschränken einer gleitenden Bewegung des inneren Kassettenhalters (4) während der Schwenkbewegung des äußeren Kassettenhalters (5) gekoppelt ist, um es dadurch dem inneren Kassettenhalter (4) zu ermöglichen, eine Schwenkbewegung zusammen mit dem äußeren Kassettenhalter (5) auszuführen, und zum Übertragen einer Antriebskraft auf die Gleiteinrichtung (3) zu dem inneren Kassettenhalter (4) während der Bewegung der Gleiteinrichtung (3), um dadurch den inneren Kassettenhalter (4) zusammen mit der Gleiteinrichtung (3) zu bewegen, die Eingriffseinrichtung (11, 28, 29, 30) eine Vielzahl von Eingriffsstiften (11, 30) aufweist, die auf wenigstens einem des inneren und des äußeren Kassettenhalters (4, 5) vorgesehen sind, und eine Vielzahl von längs verlängerten Bohrungen (28, 29), die in wenigstens einem anderen des inneren und des äußeren Kassettenhalters (4, 5) vorgesehen sind, um in Eingriff mit den Stiften (11, 30) zu kommen, die Führungseinrichtung eine Führungsnut (43) aufweist, die in der Gleiteinrichtung (3) vorgesehen ist, um sich in einer Umfangsrichtung einer Mitte des Drehzapfens (10) des äußeren Kassettenhalters (5) zu erstrecken, und die Führungsnut (43) mit mindestens einem der Eingriffsstifte (11) im Eingriff ist.

2. Vorrichtung nach Anspruch 1, wobei die Bohrungen (28, 29) so ausgebildet sind, daß sie eine größere Größe als ein Durchmesser der Eingriffsstifte (11, 30) aufweisen, wodurch eine Verschiebung des äußeren Kassettenhalters (5), selbst wenn eine äußere Kraft während der Operation angelegt wird, absorbiert wird, um dadurch jeglichen nachteiligen Einfluß auf den inneren Kassettenhalter (4) und die Gleiteinrichtung (3) zu vermeiden.

3. Vorrichtung nach Anspruch 1 oder 2, bei der der innere Kassettenhalter (4) in Richtung auf die Gleiteinrichtung (3) durch Federteile (19) gedrückt wird, die an dem äußeren Kassettenhalter (5) befestigt sind, und die mit weiteren Federteilen (18) zum Herunterdrücken der in dem inneren Kassettenhalter (4) aufgenommenen Bandkassette (31) in Richtung auf einen unteren Abschnitt (38) des inneren Kassettenhalters (4), und, wenn die Kassette (31) auf die Gleiteinrichtung (3) geladen wird, der untere Abschnitt (38) des inneren Kassettenhalters (4) von der Kassette (31) getrennt wird, um dadurch die Kassette (31) am Ort zu positionieren.

## Revendications

1. Dispositif de chargement de cassette comportant: des moyens formant coulisse consistant en un châssis mobile(3) rattaché à un mécanisme de coulisse pour déplacer une cassette à ruban vers et depuis une position d'enregistrement/reproduction tout en supportant ladite cassette sur lesdits moyens formant coulisse ; et des moyens de chargement possédant un support de cassette intérieur (4) et un support de cassette extérieur (5) pour charger ladite cassette sur lesdits moyens formant coulisse, ledit support de cassette extérieur (5) étant apte à pivoter par rapport auxdits moyens formant coulisse en étant supporté par des axes de pivotement (10) prévus sur un châssis principal (2), et ledit support de cassette intérieur (4) étant apte à se déplacer conjointement avec ledit support de cassette extérieur (5) entre une position d'entrée/sortie pour la cassette (31) et une position fermée, caractérisé en ce que ledit support de cassette intérieur (4) est supporté par ledit support de cassette extérieur (5) par l'intermédiaire de moyens d'engagement (11, 28, 29, 30) pour rattacher ledit support de cassette intérieur (4) audit support de cassette extérieur (5), ledit support de cassette intérieur (4) est couplé auxdits moyens formant coulisse (3) par l'intermédiaire de moyens de guidage (42, 43) pour limiter un coulissement dudit support de cassette intérieur (4) durant le pivotement dudit support de cassette extérieur (5) permettant ainsi audit support de cassette intérieur (4) de pivoter conjointement avec ledit support de cassette extérieur (5) et pour transférer une force d'entraînement desdits moyens formant coulisse (3) audit support de cassette intérieur (4) durant le déplacement desdits moyens formant coulisse (3) pour ainsi déplacer ledit support de cassette intérieur (4) conjointement avec lesdits moyens formant coulisse (3), lesdits moyens d'engagement (11, 28, 29, 30) comprennant une pluralité de tiges d'engagement (11, 30) prévues sur au moins l'un desdits supports de cassette intérieur et extérieur (4, 5) et une pluralité de trous qui s'étendent longitudinalement (28, 29) prévus dans au moins un autre desdits supports de cassette intérieur et extérieur (4, 5) pour recevoir lesdites tiges (11, 30), lesdits moyens de guidage comprennant une gorge de guidage (43) qui est prévue dans lesdits moyens formant coulisse (3) pour s'étendre dans une direction circonférentielle d'un axe de pivotement (10) dudit support de cassette extérieur (5), et ladite gorge de guidage (43) recevant au moins l'une desdites tiges d'engagement (11).

2. Dispositif selon la revendication 1, dans lequel lesdits trous (28, 29) sont formés de manière à avoir une dimension supérieure à un diamètre desdites tiges d'engagement (11, 30), de telle sorte que même si une force extérieure est appliquée durant le fonctionnement, un déplacement dudit support de cassette extérieur (5) est absorbé évitant ainsi tout effet défavorable sur ledit support de cassette intérieur (4) et lesdits moyens formant coulisse (3).

3. Dispositif selon la revendication 1 ou 2, dans lequel ledit support de cassette intérieur (4) est enfoncé vers lesdits moyens formant coulisse (3) par des éléments élastiques (19) fixés audit support de cassette extérieur (5), et est muni d'autres éléments élastiques (18) pour enfoncer ladite cassette à ruban (31), reçue dans ledit support de cassette intérieur (4), vers une partie inférieure (38) dudit support de cassette intérieur (4), et lorsque ladite cassette (31) est chargée sur lesdits moyens formant coulisse (3), la partie inférieure (38) dudit support de cassette intérieur (4) est séparée de ladite cassette (31) pour ainsi placer ladite cassette (31) en position.
